# EUROPÄISCHE PATENTSCHRIFT

(11) **EP 3 356 713 B1**
(45) Veröffentlichungstag und Bekanntmachung des Hinweises auf die Patenterteilung: **09.07.2025**
(21) Anmeldenummer: 16778283.8
(22) Anmeldetag: 30.09.2016
(51) Int. Cl.: F16L 3/10, F16L 3/133

(54) **VORRICHTUNG ZUM HALTEN EINER LEITUNG IN EINER GETRÄNKEABFÜLLANLAGE**
DEVICE FOR HOLDING A LINE IN A BEVERAGE FILLING SYSTEM
DISPOSITIF DE RETENUE D'UN CONDUIT DANS UN SYSTÈME DE REMPLISSAGE DE CONTENANTS À BOISSON

(30) Priorität: 01.10.2015 DE 102015116727
(43) Veröffentlichungstag der Anmeldung: 08.08.2018
(73) Patentinhaber: Krones AG, 93073 Neutraubling (DE)
(72) Erfinder: SCHOEBERL, Wolfgang, 93073 Neutraubling (DE); JOHANNES, Herrmann, 93073 Neutraubling (DE)
(74) Vertreter: Nordmeyer, Philipp Werner
(86) Internationale Anmeldenummer: PCT/EP2016/073420
(87) Internationale Veröffentlichungsnummer: WO 2017/055546

(56) Entgegenhaltungen:
- EP-A1- 0 338 340
- FR-A- 1 596 785
- US-A- 1 480 085
- US-A- 4 750 651
- US-A1- 2012 047 712

## Beschreibung

### Technisches Gebiet

Die vorliegende Erfindung betrifft eine Vorrichtung zum Halten einer Leitung in einer Getränkeabfüllanlage, insbesondere zum Halten von Abfüllmedien- führenden Leitungen, Betriebsmedien- führenden Leitungen und/oder Steuersignal- und Energie- führenden Leitungen in einer Getränkeabfüllanlage.

### Stand der Technik

Es ist bekannt, dass Leitungen an den jeweiligen sie haltenden Strukturen über Rohrschellen befestigt werden. Die Rohrschellen sind dabei üblicherweise so ausgebildet, dass die Leitung in die Rohrschelle eingelegt wird, dann ein Halteteil aufgebracht wird und dieses Halteteil dann mit der Rohrschelle verschraubt wird. Bei herkömmlichen Rohrschellen sind hierzu mindestens zwei Schrauben anzuziehen, mittels welchen die beiden Hälften der Rohrschelle miteinander verbunden werden. Die Rohrschellen weisen weiterhin als Halterung einen angeschweißten Gewindebolzen auf, mittels welchem die Rohrschelle dann an der jeweiligen Haltestruktur festgelegt werden kann.

Entsprechend weisen die herkömmlichen Rohrschellen, neben der aufwändigen Montage, auch hygienische Schwachstellen auf, welche insbesondere in Getränkeabfüllanlagen unerwünscht sind. Durch das Bereitstellen von bis zu drei offenen Gewinden, nämlich den beiden Gewinden zum Verbinden der beiden Schellenteile sowie dem Gewindebolzen zur Festlegung der Rohrschelle an der Haltestruktur, ergibt sich eine schlechte Reinigbarkeit der Rohrschellen.

Die herkömmlichen Rohrschellen bilden weiterhin zwischen der jeweiligen Haltestruktur, an der sie gehalten werden, und der Rohrschelle selbst unzugängliche Bereiche aus, die für die Reinigung nur schwer zugänglich sind. Mit anderen Worten ist der Platz, der durch den von dem Gewindebolzen vorgegebenen Abstand zwischen Rohrschelle und Haltestruktur bereitgestellt wird, üblicherweise so gering bemessen, dass eine zufriedenstellende Reinigung sehr aufwändig oder überhaupt nicht möglich ist. Stützt sich die Rohrschelle über den Gewindebolzen auf einer Haltestruktur ab, ergeben sich auch unzugängliche Auflageflächen auf der Haltestruktur selbst, die einer Reinigung nur schwer zugänglich sind.

Die Montage von Rohrschellen ist weiterhin zeitaufwändig und für jeden Leitungsdurchmesser und jede Position der Rohrschelle bezüglich der Haltestruktur müssen unterschiedliche Rohrschellen bereitgestellt werden, da entsprechend auch der Gewindebolzen an den Abstand zwischen Rohrschelle und Stützstruktur angepasst werden muss.

Weiterhin können sich durch die Notwendigkeit des dreifachen Verschraubens Verspannungen in der Leitung ergeben, welche sich beispielsweise aus Ungenauigkeiten bei der Montage oder durch Toleranzen ergeben.

Solche Rohrschellen sind beispielsweise aus der DE 2 019 109 und der EP0338340 bekannt.

Aus der PI 0705402-5 A2 ist ein Leitungsbefestigungssystem bekannt, bei welchem vollständig auf Verschraubungen verzichtet werden kann und ein einstückiges Kunststoffteil zur Aufnahme der Leitung vorgesehen ist.

Aus der JP 2014-119008 A ist eine weitere Rohraufnahme bekannt, bei welcher ein Blechprofil vorgesehen ist, in welches das Leitung eingelegt werden kann, und bei welchem durch das Vorsehen eines zusätzlichen Verschlussbügels eine Verriegelung erreicht werden kann. Eine Festlegung an der Tragstruktur erfolgt über eine durch das Blechprofil hindurch geführte Schraube.

### Darstellung der Erfindung

Ausgehend von dem bekannten Stand der Technik ist es eine Aufgabe der vorliegenden Erfindung, eine Vorrichtung zum Halten einer Leitung in einer Getränkeabfüllanlage anzugeben, welche einen vereinfachten Aufbau bei verbesserten hygienischen Verhältnissen aufweist.

Diese Aufgabe wird durch eine Vorrichtung zum Halten einer Leitung in einer Getränkeabfüllanlage mit den Merkmalen des Anspruchs 1 gelöst. Vorteilhafte Weiterbildungen ergeben sich aus den Unteransprüchen.

Entsprechend wird eine Vorrichtung zum Halten einer Leitung an einer Struktur einer Getränkeabfüllanlage vorgeschlagen, umfassend eine Klammer mit zwei komplementär zueinander geformten Schenkeln zur klemmenden Aufnahme der Leitung zwischen den Schenkeln und mit einer die Schenkel tragenden Halterung zur Anbringung der Klammer an der Struktur der Getränkeabfüllanlage. Erfindungsgemäß sind die Schenkel und die Halterung einstückig aus Runddraht gebogen.

Dadurch, dass die Schenkel und die Halterung einstückig aus einem Runddraht gebogen sind, kann zum einen erreicht werden, dass die hygienischen Verhältnisse in der Vorrichtung deutlich verbessert sind, da auf Grund der einstückigen Ausbildung und auf Grund der Ausbildung aus einem Runddraht das Vorliegen von Hinterschneidungen, Stoßstellen, Rillen, Schweißstellen etc. reduziert bis vermieden wird. Dadurch ist eine verbesserte Reinigungsfähigkeit gegeben, welche gleichzeitig auch waagerechte Flächen, auf welchen Flüssigkeiten stehen können, vermeidet. Entsprechend können mit der Vorrichtung deutlich verbesserte hygienische Ergebnisse erreicht werden.

Weiterhin ist durch die einstückige Ausbildung der Klammer mit den Schenkeln und der Halterung aus einem gebogenen Runddraht eine besonders effiziente Herstellung und damit eine kostengünstige Bereitstellung der Klammer möglich. Hierbei kann ein Runddraht aus einem Material gewählt werden, welches den jeweiligen Anforderungen an Hygiene, Elastizität, Temperaturbeständigkeit, Korrosionsbeständigkeit und Steifheit gerecht wird. Es ist entsprechend eine flexible Anpassung der Klammern möglich, wobei gleichzeitig eine kostengünstige Herstellung und damit ein kostengünstiges Bereitstellen der Klammern erreicht wird. Als Runddraht können hier herkömmliche Runddrähte verwendet werden, so dass auch auf die Bereitstellung von aufwändigen Halbzeugen etc. verzichtet werden kann. Weiterhin sind Verfahren zum Biegen von Drähten, insbesondere zum Biegen von Runddraht in eine vorgegebene Form, wohlbekannt, so dass der gesamte Herstellungsprozess vereinfacht dargestellt werden kann.

Weiterhin ergibt sich durch die Bereitstellung der Klammer derart, dass komplementär zueinander gebogene Schenkel vorgesehen sind zwischen denen die Leitung klemmend aufgenommen werden kann, eine einfache Montage, da die jeweilige Leitung lediglich in die Klammer eingeschoben werden zu braucht und dann bereits klemmend in dieser gehalten wird. Damit vereinfachen sich auch die Schritte der Montage der Vorrichtung zum Halten der Leitung insbesondere gegenüber den klassisch verwendeten Rohrschellen, da aufgrund der Klemmvorrichtung auf eine Verschraubung der Leitungen verzichtet werden kann und entsprechend Arbeitsschritte eingespart werden können. Weiterhin ergibt sich, dass aufgrund der klemmenden Halterung der Leitung auch eine spannungsfreie Montage ermöglicht wird, da die Leitung zunächst zwischen dem komplementär zueinander gebogenen Schenkeln klemmend aufgenommen werden kann, und dann an der Halterung die Klammer an der jeweiligen Haltestruktur in der richtigen Höhe festgelegt werden kann.

Durch die vorgeschlagene Ausbildung der Klammern kann weiterhin erreicht werden, dass nach der Montage der Klammer unzugängliche Auflageflächen und Zwischenräume vermieden werden, die einer Reinigung nur schwer zugänglich sind.

Erfindungsgemäß weist die Klammer ein Maul zum Einführen der Leitung zwischen die Schenkel auf und die Halterung ist auf der dem Maul abgewendeten Seite der Klammer angeordnet. So kann eine einfache Montage erreicht werden, da die Leitung nur durch das Maul in die Klammer eingeschoben zu werden braucht.

Die Schenkel der Klammer sind so dimensioniert, dass eine Leitung so zwischen den beiden Schenkeln aufgenommen werden kann, dass eine Kontaktstelle des jeweiligen Schenkels mit der Leitung auf der dem Maul zugewendeten Seite der Leitung vorliegt. Damit kann eine sichere Klemmung erreicht werden, die nicht nur aufgrund von Reibung, sondern auch aus strukturellen Gründen ein sicheres Halten der Leitung zwischen den Schenkeln ermöglicht.

Um hier ein besonders bevorzugtes Verhältnis zwischen Haltekraft und einfachem Einführen zu erreichen, schließt eine die Mittelachse der Leitung und die jeweilige Kontaktstelle schneidende Gerade einen Winkel mit einer die Mittelachse der Leitung schneidenden, parallel zu einer die beiden Kontaktstellen verbindenden Geraden liegenden Mittelpunktsgeraden ein, der in einem Bereich von 10° bis 20°, besonders bevorzugt von 17°, liegt. Die Mittelpunktsgerade fällt bei einer geraden Ausbildung der Halterung mit einer senkrecht zu der Erstreckungsrichtung der Halterung angeordneten, die Mittelachse schneidenden Mittelpunktsgeraden zusammen.

Die Halterung der Klammer ist so dimensioniert, dass ein vorgegebener Abstand zwischen der Struktur der Getränkeabfüllanlage, an welcher die Klammer festgelegt werden soll, und der Leitung erreicht werden kann. Dabei kann beispielsweise berücksichtigt werden, dass ein Gefälle der Leitung über deren Erstreckung hinweg einfach und zuverlässig mit dem gleichen Klammertyp eingestellt werden kann. Dies ist besonders bei medienführenden Leitungen von besonderer Bedeutung. Die Halterung der Klammer ist daher bevorzugt so lang, dass der gleiche Klammertyp für alle Befestigungsstellen der Leitung verwendet werden kann und dennoch das Gefälle der Leitung eingestellt werden kann.

Die Klemmvorrichtung ist zur klemmenden Festlegung der Halterung an der Struktur der Getränkeabfüllanlage vorgesehen. Damit kann die Klammer an der Halterung befestigt werden und auf diese Weise an der Struktur der Getränkeabfüllanlage gehalten werden.

Dabei ist es von Vorteil, wenn die Klemmvorrichtung ein Klemmteil mit Aufnahmekanälen für mindestens zwei Stränge des Runddrahts der Halterung der Klammer vorsieht. Besonders bevorzugt weist das Klemmteil einen Bolzen zur Festlegung des Klemmteils an der Struktur der Getränkeabfüllanlage auf, um flexibel auf die unterschiedlichen Befestigungsmodalitäten eingehen zu können.

Die Klemmvorrichtung weist bevorzugt einen Abstandhalter auf, welcher zwischen Strängen des Runddrahts der Halterung eingefügt ist und einen vorgegebenen Abstand zwischen den Strängen bereitstellt, wobei der Abstandhalter bevorzugt aus EPDM hergestellt ist und wobei der Abstandshalter besonders bevorzugt einen Bolzen des Klemmteils in einer Bohrung aufnimmt. Der Abstandshalter kann die strukturelle Integrität der Klammer im fixierten Zustand weiter verbessern. Durch die Aufnahme des Bolzens kann weiterhin eine Abdeckung des Bolzens erreicht werden, so dass das hygienische Verhalten noch weiter verbessert wird. Der Abstandshalter dient weiterhin als Füllstück zur Vermeidung von Verunreinigungen.

In einer bevorzugten Ausführung weist die Klemmvorrichtung ein Halteteil auf, das Aufnahmekanäle für mindestens zwei Stränge des Runddrahts der Halterung der Klammer vorsieht. Weiterhin weist es eine Verdrehsicherung zur verdrehsicheren Aufnahme des Halteteils an der Struktur der Getränkeabfüllanlage auf, wobei das Halteteil besonders bevorzugt mit dem Klemmteil zusammenwirkt und zwischen dem Klemmteil und dem Halteteil in den Aufnahmekanälen die mindestens zwei Stränge des Runddrahts der Halterung eingeklemmt werden, besonders bevorzugt unter gleichzeitiger Aufnahme eines Abstandshalters zwischen den Strängen. Mittels des auf diese Weise ausgebildeten Halteteils kann die Klammer sicher und verdrehfest an der Struktur der Getränkeabfüllanlage gehalten werden.

Insbesondere wird durch das Fixieren der Klemmvorrichtung und das Vorsehen der parallel zueinander geführten Aufnahmekanäle erreicht, dass der Verschwenkpunkt, um welchen die beiden Schenkel der Klammer elastisch verschwenkt werden können, von der Position der Drahtschleife am Fuße der beiden Stränge der Halterung hin zu der Position der Klemmvorrichtung wandert. Mit anderen Worten wird der Hebelarm, mit welchem eine elastische Verformung der Schenkel stattfindet kann, durch das Fixieren der Klemmvorrichtung verringert, wodurch durch das Fixieren der Klemmvorrichtung gleichzeitig auch die Leitung in der Klammer fixiert wird.

Dabei ist bevorzugt die Halterung so dimensioniert, dass die Klammer relativ zu der nicht fixierten Klemmvorrichtung verschiebbar ist. So kann eine Höheneinstellung oder Abstandseinstellung erreicht werden, welche zu einer vereinfachten Justage der Klammer und damit der Relativpositionierung zwischen Leitung und Klammer führt.

Dadurch, dass eine Klemmvorrichtung zur Aufnahme der Halterung vorgesehen ist, kann die Halterung bezüglich der Klemmvorrichtung, welche dann an der Struktur der Getränkeabfüllanlage festgelegt wird, so verschoben werden, dass eine spannungsfreie Halterung der zwischen den beiden Schenkeln klemmend aufgenommenen Leitung erreicht werden kann.

In einer weiteren vorteilhaften Weiterbildung stellt die Klammer mindestens eine Verriegelungsaufnahme an einem Schenkel bereit, welche zur Aufnahme einer Verriegelung vorgesehen ist, wobei die Verriegelungsaufnahme bevorzugt in Form eines mit dem Schenkel einstückig aus dem Runddraht gebogenen Haken ausgebildet ist. Durch das Bereitstellen der Verriegelungsaufnahme kann entsprechend eine Verriegelung der Klammer erreicht werden, die über die klemmende Verriegelung hinausgeht. Damit ergibt sich eine noch sicherere Verriegelung der Leitung in der Klammer.

In einer weiter bevorzugten Ausführungsform weist die Klammer jeweils am Ende der komplementär zueinander gebogenen Schenkel einen jeweils nach außen gebogenen Aufnahmebereich für ein Verriegelungselement auf, und ein Verriegelungselement, das die beiden Aufnahmebereiche miteinander verbindet, ist vorgesehen. Das Verriegelungselement umgreift dabei die zwischen den Schenkeln aufgenommene Leitung, so dass die Leitung durch die Klammer und das Verriegelungselement dann vollständig umschlossen ist und eine sichere Verbindung und ein sicheres Halten der Leitung in der Vorrichtung erreicht wird.

In einer bevorzugten Ausgestaltung ist an jedem Schenkel eine Verriegelungsaufnahme vorgesehen und die Verriegelung weist zwei Drahtschlaufen auf, welche jeweils in einer der Verriegelungsaufnahmen einhakbar sind, wobei die Drahtschlaufen über einen Verriegelungshebel miteinander verbunden sind und der Verriegelungshebel mit der ersten Drahtschlaufe über eine erste Verriegelungsachse und mit der zweiten Drahtschlaufe über eine zweite Verriegelungsachse verschwenkbar verbunden ist, wobei die beiden Verriegelungsachsen nicht zusammenfallen. So lässt sich auf einfach herzustellende Weise ein Verriegelungselement bereitstellen, welches für eine sichere Verriegelung der Klammer hinzugezogen werden kann.

Mit Vorteil ist der Verriegelungshebel so gebogen, dass er in der verriegelten Stellung durch zumindest eine der Drahtschlaufen geschützt ist, so dass ein unbeabsichtigtes Öffnen des Verriegelungshebels vermieden wird. Es kann im montierten Zustand so sichergestellt werden, dass die Verriegelung bestehen bleibt. Besonders bevorzugt ist der Verriegelungshebel so ausgebildet und wird mit einer solchen Kraft in der Verriegelungsstellung gehalten, dass eine Entriegelung nur mittels Werkzeug und zumindest nicht mit bloßer Hand erreicht werden kann.

Bevorzugt ist die Klammer vollständig achsensymmetrisch bezüglich einer Mittelachse aufgebaut, wobei die Mittelachse mit der Einführrichtung beziehungsweise Einschnapprichtung der Leitung zwischen die beiden komplementär zueinander gebogenen Schenkeln zusammenfällt.

Die Halterung weist bevorzugt zwei parallel zueinander geführte Drahtbahnen auf, welche im von dem Maul abgewendeten Ende in einer Schlaufe enden, so dass der Runddraht quasi parallel zu sich selbst zurückgeführt wird. Im Bereich der beiden parallel zueinander geführten Stränge des Runddrahts an der Halterung kann über die Klemmvorrichtung erreicht werden, dass die Klammer einen Festlegungspunkt an der Struktur der Getränkeabfüllanlage so aufweist, dass bezüglich der Klemmvorrichtung eine Längenverstellung erreicht wird. Auf diese Weise lässt sich durch das Einclipsen der Leitung in einem ersten Schritt und dann durch das Verschieben der Halterung bezüglich der Klemmvorrichtung bis eine spannungsfreie Aufnahme erreicht wird, ein spannungsfreies Montieren von Leitungen erreicht werden.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische perspektivische Ansicht einer Vorrichtung zum Halten einer Leitung in einer Getränkeabfüllanlage, wobei ein Verriegelungselement in einer verriegelten Stellung gezeigt ist;
- Figur 2: eine schematische perspektivische Darstellung der Vorrichtung zum Halten einer Leitung aus Figur 1, wobei das Verriegelungselement in einer geöffneten Stellung gezeigt ist;
- Figur 3: eine schematische Draufsicht auf eine Vorrichtung zum Halten einer Leitung in einer Getränkeabfüllanlage, wobei mehrere Klammern zum Halten von Leitungen an einer Struktur der Getränkeabfüllanlage festgelegt sind;
- Figur 4: eine Schnittdarstellung durch die in Figur 3 gezeigte Vorrichtung zum Halten einer Leitung;
- Figur 5: eine schematische Darstellung unterschiedlicher Komponente einer Klemmvorrichtung zum Klemmen einer Klammer der Vorrichtung zum Halten einer Leitung; und
- Figur 6: eine schematische perspektivische Darstellung einer weiteren Vorrichtung zum Halten einer Leitung.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

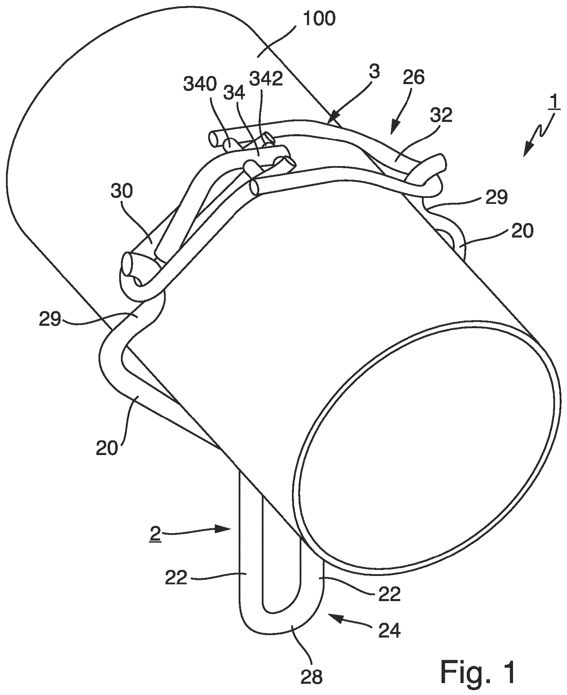

Figur 1 zeigt schematisch eine perspektivische Ansicht einer Vorrichtung 1 zum Halten einer schematisch dargestellten Leitung 100 in einer Getränkeabfüllanlage.

Die Vorrichtung 1 umfasst eine Klammer 2, in der die schematisch dargestellte Leitung 100 klemmend aufgenommen ist. Die Klammer 2 weist dazu zwei komplementär zueinander gebogene Schenkel 20 auf, zwischen welchen die Leitung 100 klemmend aufgenommen wird, so dass die Leitung 100 bereits allein durch die Klemmung in der Klammer 2 gehalten wird. Die Leitung 100 kann dabei durch ein zwischen den beiden Schenkeln 20 ausgebildetes Maul 26 klemmend zwischen die beiden Schenkel 20 eingeschoben werden.

Die beiden Schenkel 20 der Klammer 2 sind mit einer Halterung 24 der Klammer 2 verbunden, wobei es die Halterung 24 der Klammer 2 ermöglicht, die Klammer 2 auf eine weiter unten beschriebene Weise an einer Struktur der Getränkeabfüllanlage festzulegen.

Die Klammer 2 ist einstückig ausgebildet und aus einem Runddraht gebogen, wie sich auch aus der Figur 1 schematisch direkt erkennen lässt. Dabei erstreckt sich entsprechend jeder Schenkel 20 in einen Strang 22 der Halterung 24, wobei die beiden Stränge 22 der Halterung 24 parallel zueinander ausgebildet sind. Die beiden Stränge 22 der Halterung 24 sind über eine Drahtschleife 28 miteinander verbunden, wobei die Drahtschleife 28 dem Maul 26 der Klammer 20 gegenüber liegt.

Entsprechend verläuft der Runddraht von einem Schenkel 20 über den Strang 22 der Halterung 24 zu der Schleife 28, und dann wieder über den zweiten Strang 22 der Halterung 24 zurück zu dem zum ersten Schenkel 20 komplementären Schenkel 20.

Es kann auf diese Weise kostengünstig ein gebogenes Drahtteil aus einem Runddraht hergestellt werden, wobei der Runddraht Materialeigenschaften aufweisen kann, welche dem jeweiligen Anwendungszweck angemessen sind. Beispielsweise kann der Runddraht aus einem Material hergestellt sein, welches die für die jeweilige Anforderung der jeweiligen Klemmvorrichtung entsprechenden Elastizitäts- und Steifigkeitsanforderungen aufweist. Weiterhin kann das Material des Runddrahts die gewünschte Korrosionsbeständigkeit und die gewünschten Oberflächeneigenschaften aufweisen, so dass hygienische Aspekte auch aufgrund des Materials berücksichtigt werden können.

Es ergibt sich sofort, dass die Klammer 2 aufgrund ihrer Ausbildung als einstückige, aus einem Runddraht gebogene Struktur auch strukturell besonders hygienisch ausgebildet sein kann, da keine Stöße, Schweißungen, Rillen oder Riefen etc. vorgesehen sind, in welchen eine Ansammlung von Schmutz stattfinden könnte. Darüber hinaus kann durch die Ausprägung als Runddraht auch vermieden werden, dass waagerechte Flächen vorkommen, auf welchen Flüssigkeiten stehenbleiben könnten, was dann zu hygienischen Problemen führen könnte.

Die Klammer 2 weist weiterhin zwei Verriegelungsaufnahmen 29 auf, welche zur Aufnahme eines Verriegelungselementes 3 vorgesehen sind. Das Verriegelungselement 3 ist dazu vorgesehen, eine vollständig sichere Aufnahme der Leitung 100 in der Klammer 2 zu erreichen, so dass die Leitung 100 nicht mehr nur durch die Klemmwirkung der Klammer 2, sondern zusätzlich durch vollständiges Umschließen gehalten wird. Dabei kann das Verriegelungselement 3 so ausgebildet sein, dass es über die Verriegelungsaufnahmen 29 eine weitere Vorspannung auf die Schenkel 20 aufbringt und entsprechend eine spielfreie Aufnahme der Leitung 100 auch bei hohen Belastungen erreicht wird.

Jede Verriegelungsaufnahme 29 ist in dem gezeigten Ausführungsbeispiel in Form eines mit dem Schenkel 20 einstückig aus dem Runddraht gebogenen Haken ausgebildet. Damit können auch die Verriegelungsaufnahmen 29 einstückig mit der Klammer 2 als einfache Drahtbiegeteile ausgebildet werden.

Das Verriegelungselement 3 weist zwei Drahtschlaufen 30, 32 auf, welche jeweils mit ihrem Schlaufenteil in eine der Verriegelungsaufnahmen 29 der Klammer 2 eingreifen und so an der Klammer 2 gehalten werden. Die beiden Drahtschlaufen 30, 32 des Verriegelungselementes 3 sind dabei über einen Verriegelungshebel 34 miteinander verbunden. Der Verriegelungshebel 34 ist über eine erste Verriegelungsachse 340 mit der ersten Drahtschlaufe 30 und über eine zweite Verriegelungsachse 342 mit der zweiten Drahtschlaufe 32 verschwenkbar verbunden. Die beiden Verriegelungsachsen 340, 342 fallen nicht zusammen, so dass durch eine verschwenkende Betätigung des Verriegelungshebels 34 um eine der beiden Verriegelungsachsen 340, 342, beziehungsweise um eine zwischen diesen Verriegelungsachsen 340, 342 liegende Achse herum, eine relative Positionsänderung zwischen den beiden Drahtschlaufen 30, 32 hervorgerufen werden kann. Der Abstand zwischen den beiden Verriegelungsachsen 340, 342 ist so gewählt, dass der resultierende Hub bei einer Verschwenkung des Verriegelungshebels 34 eine zuverlässige Verspannung beziehungsweise Verriegelung des Verriegelungselementes 3 in den Verriegelungsaufnahmen 29 erreicht. Damit kann durch Verschwenken des Verriegelungshebels 34 das Verriegelungselement 3 sowohl an der Leitung 100 fest anliegen, als auch die beiden Verriegelungsaufnahmen 29 so aufeinander zu vorspannen, dass ein sicherer Sitz der Leitung 100 in den beiden Schenkeln 20 erreicht wird.

Die Position und der Abstand zwischen den beiden Verriegelungsachsen 340, 342 ist weiterhin so gewählt, dass auf den Verriegelungshebel 34 eine Schließkraft in Schließrichtung wirkt. Mit anderen Worten wird der Verriegelungshebel 34 aufgrund der durch ihn aufgebrachten Vorspannung in der verriegelten Stellung gehalten. Das Verriegelungselement 3 ist also selbstsperrend ausgebildet.

Eine Öffnung beziehungsweise ein Entriegeln des verriegelten Verriegelungselementes 3 kann nur mittels Werkzeug durchgeführt werden, wobei der Verriegelungshebel 34 zumindest so geformt ist, dass er nicht mit bloßen Händen geöffnet werden kann. In einer bevorzugten Auslegung ist auch die den Verriegelungshebel 34 in die Verschlussrichtung zwingende Kraft so hoch, dass ein Öffnen ohne Werkzeug nicht möglich ist.

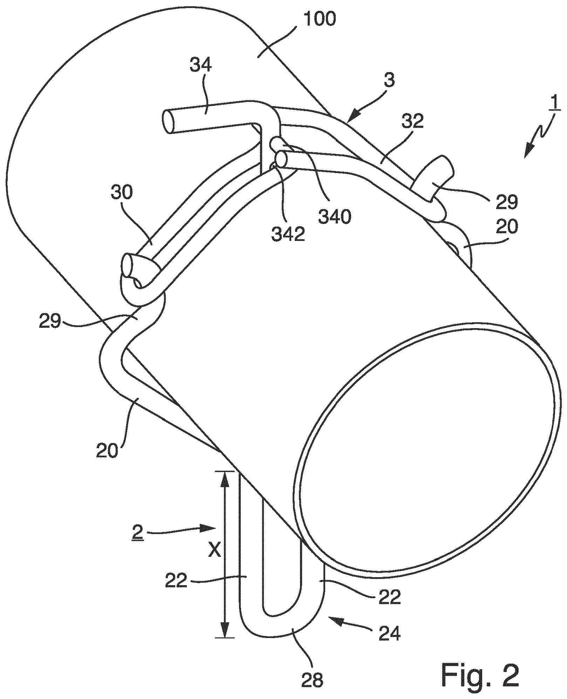

Figur 2 zeigt die Vorrichtung 1 zum Halten der Leitung 100 in einem Zustand, in welchem das Verriegelungselement 3 geöffnet ist und der Verriegelungshebel 34 in einer gelösten Position angeordnet ist. Damit liegen auch die beiden Drahtschlaufen 30, 32 des Verriegelungselementes 3 nicht unter Zug an den Verriegelungsaufnahmen 29 der Klammer 2 an, sondern sind hier nur lose gehalten. Dazu wurde der Verriegelungshebel 34 so verschwenkt, dass die beiden Verriegelungsachsen 340, 342 so aufeinander zu bewegt wurden, dass sich die beiden Drahtschlaufen 30, 32 entsprechend relativ zueinander auseinander bewegt haben und damit die in der Figur 1 gezeigte Verriegelung gelöst haben. Das Verriegelungselement 3 kann entsprechend von den Verriegelungsaufnahmen 29 abgehoben werden und die Leitung 100 entnommen werden. In diesem Zustand kann das Verriegelungselement 3 natürlich auch auf die Verriegelungsaufnahmen 29 aufgesetzt werden, um eine zwischen den Schenkeln 20 aufgenommene Leitung 100 zu verriegeln.

In den Figuren 1 und 2 ist weiterhin zu erkennen, dass im Bereich der Halterung 24 aufgrund der Bereitstellung der beiden parallel geführten Stränge 22 eine Festlegung der Halterung 24 innerhalb eines mit dem Bezugszeichen X bezeichneten Abschnittes stattfinden kann. Mit anderen Worten kann die Klammer 2 aufgrund der derart ausgeprägten Halterung 24 in unterschiedlichen Positionen an einer Struktur der Getränkeabfüllanlage festgelegt werden.

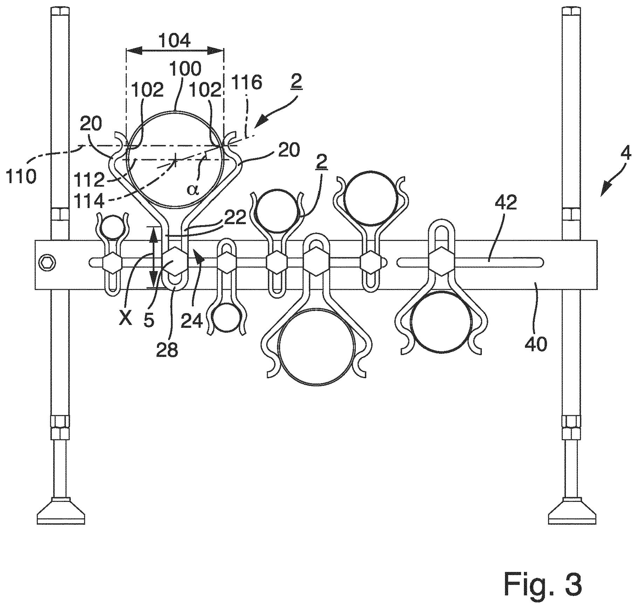

Die Festlegung der Klammer 2 im Bereich ihrer Halterung 24 an einer Struktur 4 der Getränkeabfüllanlage wird in Figur 3 schematisch gezeigt. Die Struktur 4 der Getränkeabfüllanlage ist in Form eines Aufnahmebocks gezeigt, welcher ein Paneel 40 aufweist, an welchem mehrere Klammern 2 unterschiedlicher Dimensionierung angebracht sind. Das Paneel 40 weist bevorzugt keine nach oben weisenden, waagerechten Flächen auf, um ein problemloses Abfließen von Flüssigkeiten zu erreichen und entsprechend eine einfache Reinigbarkeit und eine gute Hygiene bereit zu stellen.

Die unterschiedlichen, am dem Paneel 40 angebrachten Klammern 2 halten dabei jeweils zwischen den Schenkeln 20 aufgenommenen Leitungen 100 rein klemmend. Mit anderen Worten ist kein Verriegelungselement 3 vorhanden, sondern die Leitungen 100 werden nur aufgrund der Klemmung und der Fixierung durch die Festlegung der Klammer 2 gehalten.

Die Halterung 24 der Klammer 2 ist bevorzugt so dimensioniert, dass ein vorgegebener Abstand zwischen der Struktur der Getränkeabfüllanlage, also dem Paneel 40, und der Leitung 100 erreicht werden kann. Dabei kann beispielsweise berücksichtigt werden, dass ein Gefälle der Leitung 100 über deren Erstreckung hinweg einfach und zuverlässig mit dem gleichen Klammertyp eingestellt werden kann. Dies ist besonders bei medienführenden Leitungen 100 von besonderer Bedeutung. Die Halterung 24 der Klammer 2 ist daher bevorzugt so lang, dass der gleiche Klammertyp für alle Befestigungsstellen der Leitung 100 verwendet werden kann und dennoch das Gefälle der Leitung 100 eingestellt werden kann.

Dabei ist zu erkennen, dass die Klemmung der Leitung 100 daher stattfindet, da die Kontaktstelle 102 zwischen dem Schenkel 20 und der Leitung 100 außerhalb eines maximalen Durchmessers 104 des Leitung 100 vorliegt. Mit anderen Worten wird die Leitung 100 so weit zwischen die beiden symmetrisch zueinander ausgebildeten Schenkel 20 der Klammer 2 eingeschoben, dass die Schenkel 20 wieder ein Stück zurück federn und die Leitung 100 entsprechend sicher darin geklemmt ist.

Die Kontaktstellen 102 bilden zwischen sich eine Gerade 110 aus. Parallel zu dieser Geraden schneidet eine Mittelpunktsgerade 112 die Leitungsachse 114 der Leitung 100. Die Mittelpunktsgerade 112 schließt mit einer durch die Leitungsachse 114 und eine Kontaktstelle 102 verlaufenden Geraden 116 bevorzugt einen Winkel α ein, der in einem Bereich von 10° bis 20°, besonders bevorzugt von 17°, liegt. Auf diese Weise kann ein besonders bevorzugtes Verhältnis zwischen hoher Haltekraft und einfachem Einführen der Leitung 100 in die Klammer 2 erreicht werden.

Bezüglich der Halterung 24 ist aufgrund der unterschiedlichen gezeigten Beispiele gut zu erkennen, dass der Bereich X, welcher durch die beiden parallel geführten Stränge 22 des Runddrahtes an der Halterung hervorgerufen wird, eine Höhenverstellung beziehungsweise Verstellung bezüglich der durch das Paneel 40 vorgegebenen Struktur 4 der Getränkeabfüllanlage zu ermöglicht. Entsprechend kann eine einfache Längseinstellung der Klammer 2 durch Verschieben der Halterung 24 relativ zu einer nachfolgend beschriebenen Klemmvorrichtung 5 erreicht werden.

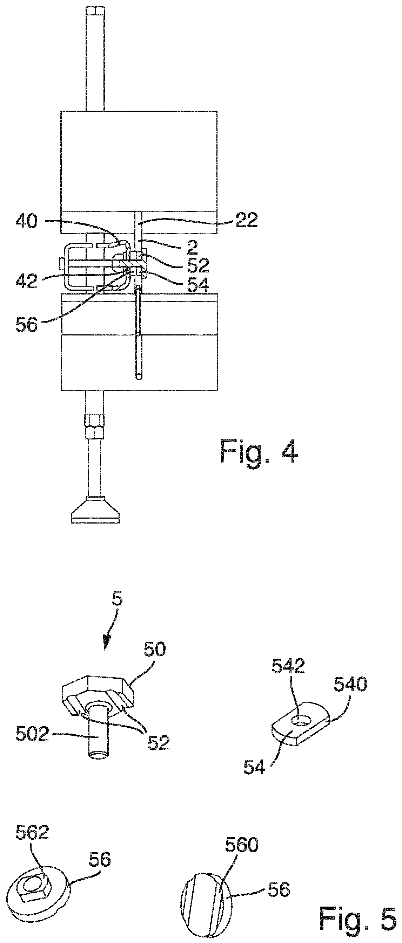

Die Struktur der Klemmvorrichtung 5 zum Klemmen beziehungsweise Halten der Klammer 2 an der Struktur 4 der Getränkeabfüllanlage wird in den Figuren 4 und 5 einmal schematisch dargestellt, wobei in Figur 5 die einzelnen Teile der Klemmvorrichtung 5 gezeigt werden.

Die Klemmvorrichtung 5 weist daher beispielsweise ein Klemmteil 50 auf, welches zwei parallel zueinander ausgebildete Aufnahmekanäle 52 umfasst, welche zur Aufnahme der beiden Stränge 22 der Halterung 24 vorgesehen sind. Die beiden Aufnahmekanäle 52 weisen entsprechend einen Querschnittsradius auf, welcher dem Radius des für die Klammer 2 verwendeten Runddrahts entspricht. Durch die Führung der beiden Führungskanäle 52 in paralleler Weise können die beiden Stränge 22 der Halterung 24 bei fester Aufnahme in den beiden Führungskanälen 52 nicht mehr relativ zueinander bewegt werden, so dass entsprechend die Verschwenkachse einer möglichen elastischen Verschwenkung der beiden Schenkel 20 gegeneinander von der Drahtschleife 28 auf die Position des Klemmteils 50 beziehungsweise auf die Position der Klemmvorrichtung 5 wandert. Hierdurch wird der Hebel einer möglichen elastischen Verschwenkung insgesamt verringert, so dass auch die Elastizität der beiden Schenkel 20 gegeneinander reduziert wird, was entsprechend in einer erhöhten Klemmwirkung auf die Leitung 100 resultiert, wenn die Klemmvorrichtung 5 fixiert ist.

In Figur 5 ist als ein weiteres Teil der Klemmvorrichtung 5 ein Abstandshalter 54 vorgesehen, welcher zwischen die beiden Stränge 22 der Halterung 24 eingefügt wird. Der Abstandshalter 54 weist entsprechend ebenfalls zwei parallele Kanäle 52 auf, deren Querschnittsradius dem Querschnittsradius des Runddrahtes der Klammer 2 entspricht. Der Abstandshalter 54 weist weiterhin eine Bohrung 542 auf, durch welche hindurch ein Gewindebolzen 502 des Klemmteils 50 geführt werden kann.

Weiterhin ist als Teil der Klemmvorrichtung 5 ein Halteteil 56 vorgesehen, welches auf seiner einen Seite ebenfalls Führungskanäle 560 aufweist, in welche die beiden Stränge 22 der Halterung 24 eingeführt werden können. Auf der Rückseite des Halteteils 56 ist eine Verdrehsicherung 562 vorgesehen ist, welche eine drehfeste Halterung des Halteteils 56 in einem Langloch 42 des Paneels 40 und damit an der Struktur 4 der Getränkeabfüllanlage ermöglicht.

Entsprechend kann, so wie beispielsweise in Figur 4 gezeigt, der Runddraht der Klammer 2 beziehungsweise die beiden Stränge 22 der Halterung 24 der Klammer 2 zwischen dem Klemmteil 50 und dem Halteteil 56 eingeklemmt werden, wobei die Stränge 22 jeweils in den Aufnahmekanälen 52, 560 aufgenommen sind. Zwischen den Strängen 22 ist bevorzugt auch der Abstandshalter 54 vorgesehen. Das Halteteil 56 ist drehfest dem Paneel 40 beziehungsweise in einem Langloch 42 des Paneels 40 gehalten. Entsprechend ergibt sich auf diese Weise eine zuverlässige Klemmung der Klammer 2 an dem Paneel 40.

Dabei werden weiterhin die Grundsätze des hygienischen Designs berücksichtigt und wenige Stöße und Flächen bereitgestellt und sämtliche Flächen so abgeschrägt vorgesehen, so dass ein Abfließen von Flüssigkeiten ermöglicht wird.

Der Abstandshalter 54 ist bevorzugt aus EPDM hergestellt und deckt aufgrund seiner Bohrung 542 ein schwer reinigbares Gewinde des Klemmteils 50 ab.

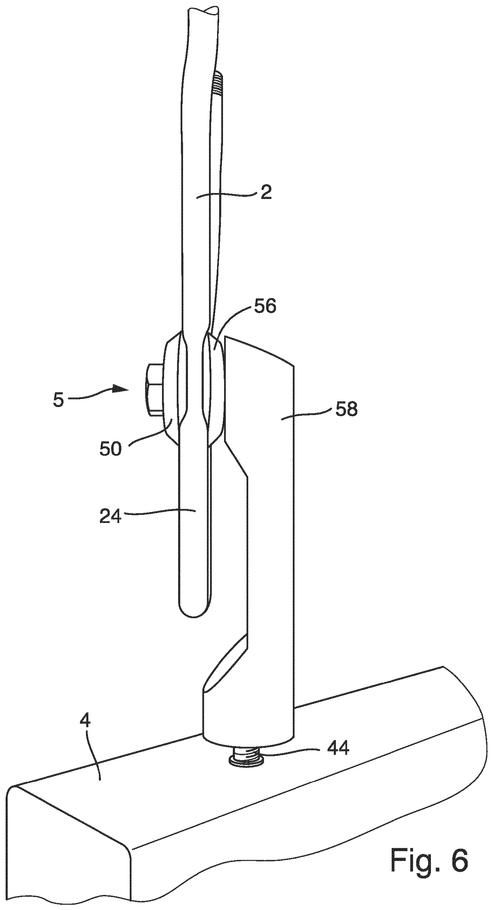

In Figur 6 ist eine weitere Ausbildung einer Vorrichtung 1 dargestellt. Dabei ist die Klammer 2 so wie bereits oben beschrieben ausgebildet. Im Bereich der Halterung 24 der Klammer 2 ist eine Klemmvorrichtung 5 vorgesehen, die ein Klemmteil 50 und ein Halteteil 56 aufweist. Die Klemmvorrichtung 5 ist an einer Verlängerung 58 gehalten, welche auf einen Gewindebolzen 44 der Struktur 4 der Getränkeabfüllanlage aufgeschraubt ist. Der Gewindebolzen 44 ist bevorzugt in die Struktur 4 eingenietet.

Das Halteteil 56 hat auf seiner Rückseite - entgegen dem oben beschriebenen Halteteil - keine Verdrehsicherung, so dass es an der Verlängerung 58 zumindest während der Montage rotierbar aufgenommen ist. Damit ergibt sich, dass die Klammer 2 besonders flexibel ausgerichtet werden kann, da sowohl die Verlängerung 58 auf dem Gewindebolzen 44 rotierbar ist, als auch die Klammer 2 aufgrund der fehlenden Verdrehsicherung um die Klemmvorrichtung 5 herum rotierbar ist.

Bevorzugt wird eine Dichtung zwischen der Verlängerung 58 und der Struktur 4 der Getränkeabfüllanlage um den Gewindebolzen 44 herum vorgesehen, um eine zuverlässige Abdichtung und eine hygienisch einwandfreie Ausbildung zu erreichen. Dabei ist es bevorzugt, die Dichtung so auszubilden, dass die Dichtung auch bei einer vollständigen Rotation der Verlängerung 58 um den Gewindebolzen 44 herum zuverlässig abdichtet, um eine gute Einstellbarkeit zuverlässig zu erreichen.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Vorrichtung zum Halten einer Leitung in einer Getränkeabfüllanlage
- 2: Klammer
- 20: Schenkel
- 22: Strang der Halterung
- 24: Halterung
- 26: Maul der Klammer
- 28: Drahtschleife
- 29: Verriegelungsaufnahme
- 3: Verriegelungselement
- 30: Drahtschlaufe
- 32: Drahtschlaufe
- 34: Verriegelungshebel
- 340: erste Verriegelungsachse
- 342: zweite Verriegelungsachse
- 4: Struktur der Getränkeabfüllanlage
- 40: Paneel
- 42: Langloch
- 44: Gewindebolzen
- 5: Klemmvorrichtung
- 50: Klemmteil
- 52: Aufnahmekanal
- 502: Gewindebolzen
- 54: Abstandshalter
- 540: Aufnahmekanal
- 542: Bohrung
- 56: Halteteil
- 560: Aufnahmekanal
- 562: Verdrehsicherung
- 58: Verlängerung
- 100: Leitung
- 102: Kontaktstelle
- 104: maximaler Durchmesser
- 110: Linie zwischen den Kontaktstellen
- 112: Mittelpunktsgerade
- 114: Leitungsachse
- 116: Gerade zwischen Leitungsachse und Kontaktstelle
- α: Winkel

## Patentansprüche

1. Vorrichtung (1) zum Halten einer Leitung (100) an einer Struktur (4) einer Getränkeabfüllanlage, umfassend eine Klammer (2) mit zwei komplementär zueinander geformten Schenkeln (20) zur klemmenden Aufnahme der Leitung (100) zwischen den Schenkeln (20) und mit einer die Schenkel (20) tragenden Halterung (24) zur Anbringung der Klammer (2) an der Struktur (4) der Getränkeabfüllanlage, wobei die Schenkel (20) und die Halterung (24) einstückig aus Runddraht gebogen sind,
die Halterung (24) der Klammer (2) so dimensioniert ist, dass ein vorgegebener Abstand zwischen der Struktur (4) der Getränkeabfüllanlage und der Leitung (100) erreicht werden kann, bevorzugt um ein Gefälle der Leitung (100) über deren Erstreckung hinweg einstellen zu können,
eine Klemmvorrichtung (5) zur klemmenden Festlegung der Halterung (24) an der Struktur (4) der Getränkeabfüllanlage vorgesehen ist,
die Halterung (24) so dimensioniert ist, dass die Klammer (2) relativ zu der nicht fixierten Klemmvorrichtung (5) verschiebbar ist, um die Einstellbarkeit des Abstands zwischen der Struktur (4) und der Leitung (100) zu erreichen,
die Klammer (2) ein Maul (26) zum Einführen der Leitung (100) zwischen die Schenkel (20) aufweist und die Halterung (24) auf der dem Maul (26) abgewendeten Seite der Klammer (2) angeordnet ist, und
sich entsprechend jeder Schenkel (20) in einen Strang (22) der Halterung (24) erstreckt, die beiden Stränge (22) der Halterung (24) parallel zueinander ausgebildet und über eine Drahtschleife (28) miteinander verbunden sind, wobei die Drahtschleife (28) dem Maul (26) der Klammer (20) gegenüber liegt, wobei
der Runddraht, der die Klammer (2) formt, sich vollständig in einer Ebene erstreckt.

2. Vorrichtung (1) gemäß Anspruch 1, **dadurch gekennzeichnet, dass** die Schenkel (20) so dimensioniert sind, dass eine Leitung (100) derart zwischen den beiden Schenkeln (20) aufgenommen werden kann, dass eine Kontaktstelle (102) der Klammer (2) mit der Leitung (100) auf der dem Maul (26) zugewendeten Seite der Leitung (100) liegt.

3. Vorrichtung (1) gemäß einem der vorstehenden Ansprüche, **dadurch gekennzeichnet, dass** die Klammer (2) die Leitung (100) an Kontaktstellen (102) kontaktiert, welche zwischen sich eine Gerade (110) ausbilden, wobei parallel zu dieser Geraden (110) eine Mittelpunktsgerade (112) die Leitungsachse (114) der Leitung (100) schneidet und die Mittelpunktsgerade (112) mit einer durch die Leitungsachse (114) und eine der Kontaktstellen (102) verlaufenden Geraden (116) einen Winkel (α) einschließt, der in einem Bereich von 10° bis 20°, besonders bevorzugt von 17°, liegt.

4. Vorrichtung (1) gemäß einem der vorigen Ansprüche, **dadurch gekennzeichnet, dass** die Klemmvorrichtung (5) ein Klemmteil (50) mit Aufnahmekanälen (52) für mindestens zwei Stränge (22) des Runddrahts der Halterung (24) der Klammer (2) vorsieht.

5. Vorrichtung (1) gemäß Anspruch 4, **dadurch gekennzeichnet, dass** das Klemmteil (50) einen Bolzen (502) zur Festlegung des Klemmteils (50) an der Struktur (4) der Getränkeabfüllanlage aufweist

6. Vorrichtung (1) gemäß einem der vorigen Ansprüche, **dadurch gekennzeichnet, dass** die Klemmvorrichtung (5) einen Abstandhalter (54) aufweist, welcher zwischen Strängen (22) des Runddrahts der Halterung (24) eingefügt ist und einen vorgegebenen Abstand zwischen den Strängen (22) bereitstellt, wobei der Abstandhalter (54) bevorzugt aus EPDM hergestellt ist und wobei der Abstandshalter (54) bevorzugt einen Bolzen (502) des Klemmteils (50) in einer Bohrung (542) aufnimmt.

7. Vorrichtung (1) gemäß einem der vorigen Ansprüche, **dadurch gekennzeichnet, dass** die Klemmvorrichtung (5) ein Halteteil (56) aufweist, das Aufnahmekanäle (560) für mindestens zwei Stränge (22) des Runddrahts der Halterung (24) der Klammer (2) und eine Verdrehsicherung (562) zur verdrehsicheren Aufnahme des Halteteils (56) an der Struktur (4) der Getränkeabfüllanlage vorsieht, wobei das Halteteil (56) bevorzugt mit dem Klemmteil (50) zusammenwirkt und zwischen dem Klemmteil (50) und dem Halteteil (56) in den Aufnahmekanälen (52, 560) die mindestens zwei Stränge (22) des Runddrahts der Halterung (24) eingeklemmt werden, besonders bevorzugt unter gleichzeitiger Aufnahme eines Abstandshalters (54) zwischen den Strängen (22).

8. Vorrichtung (1) gemäß einem der vorstehenden Ansprüche, **dadurch gekennzeichnet, dass** die Klammer (2) mindestens eine Verriegelungsaufnahme (29) an einem Schenkel (20) bereitstellt, welche zur Aufnahme einer Verriegelung (3) vorgesehen ist, wobei die Verriegelungsaufnahme (29) bevorzugt in Form eines mit dem Schenkel (20) einstückig aus dem Runddraht gebogenen Haken ausgebildet ist.

9. Vorrichtung (1) gemäß Anspruch 8, **dadurch gekennzeichnet, dass** an jedem Schenkel (20) eine Verriegelungsaufnahme (29) vorgesehen ist und die Verriegelung (3) zwei Drahtschlaufen (30, 32) aufweist, welche jeweils in einer der Verriegelungsaufnahmen (29) einhakbar sind, wobei die Drahtschlaufen (30, 32) über einen Verriegelungshebel (34) miteinander verbunden sind und der Verriegelungshebel (34) mit der ersten Drahtschlaufe (30) über eine erste Verriegelungsachse (340) und mit der zweiten Drahtschlaufe (32) über eine zweite Verriegelungsachse (342) verschwenkbar verbunden ist, wobei die beiden Verriegelungsachsen (340, 342) nicht zusammenfallen.

10. Vorrichtung (1) gemäß Anspruch 9, **dadurch gekennzeichnet, dass** der Verriegelungshebel (34) so gebogen ist, dass er in der verriegelten Stellung durch zumindest eine der Drahtschlaufen (30) geschützt ist, so dass ein unbeabsichtigtes Öffnen des Verriegelungshebels (34) vermieden wird.

## Claims

1. Device (1) for holding a line (100) on a structure (4) of a beverage filing system, comprising a clamp (2) having two legs (20) shaped complementary to each other for holding the line (100) between the legs (20) in a clamping manner and comprising a holder (24), which supports the legs (20) and is provided for attaching the clamp (2) to the structure (4) of the beverage filling system, wherein
the legs (20) and the holder (24) are bent from round wire as a single piece,
wherein the dimensions of the holder (24) of the clamp (2) are such that a specified distance can be achieved between the structure (4) of the beverage filling system and the line (100), preferably in order to enable a gradient to be established in the line (100) along its extent,
a clamping device (5) is provided for fastening the holder (24) in a clamping manner to the structure (4) of the beverage filling system,
the dimensions of the holder (24) are such that the clamp (2) is displaceable relative to the non-fixed clamping device (50) in order to achieve adjustability of the distance between the structure (4) and the line (100),
the clamp (2) has a mouth (26) for inserting the line (100) between the legs (20), and the holder (24) is disposed on the side of the clamp (2) that faces away from the mouth (26), and
each leg (20) extends to form one strand (22) of the holder (24), with the two strands (22) of the holder (24) formed parallel to each other and connected to each other via a wire loop (28), wherein the wire loop (28) is opposite the mouth (26) of the clamp (20),
wherein the round wire forming the clamp (2) is completely extended in one plane.

2. Device (1) according to claim 1, **characterized in that** the dimensions of the legs (20) are such that a line (100) can be accommodated between the two legs (20) such that a contact point (102) of the clamp (2) with the line (100) is on the side of the line (100) which faces the mouth (26).

3. Device (1) according to one of the preceding claims, **characterized in that** the clamp (2) contacts the line (100) at contact points (102) which form a straight line (110) between them, wherein parallel to this straight line (110), a mid-point straight line (112) intersects the line axis (114) of the line (100), and the mid-point straight line (112) forms an angle (α) with a straight line (116) passing through the line axis (114) and one of the contact points (102), said angle (α) being within the range 10° to 20°, particularly preferably 17°.

4. Device (1) according to one of the preceding claims, **characterized in that** the clamping device (5) has a clamping part (50) with channels (52) for at least two strands (22) of the round wire of the holder (24) of the clamp (2).

5. Device (1) according to claim 4, **characterized in that** the clamping part (50) has a bolt (502) for fastening the clamping part (50) to the structure (4) of the beverage filling system.

6. Device (1) according to one of the preceding claims, **characterized in that** the clamping device (5) has a spacer (54), which is inserted between strands (22) of the round wire of the holder (24), and provides a predetermined spacing between the strands (22), wherein the spacer (54) is preferably formed from EPDM, and wherein the spacer (54) preferably accommodates, in a drilled hole (542), a bolt (502) of the clamping part (50).

7. Device (1) according to one of the preceding claims, **characterized in that** the clamping device (5) has a retaining part (56), which has channels (560) for at least two strands (22) of the round wire of the holder (24) of the clamp (2), and has an anti-rotation device (562) for accommodating the retaining part (56) non-rotatably on the structure (4) of the beverage filling system, wherein the retaining part (56) preferably cooperates with the clamping part (50), and the at least two strands (22) of the round wire of the holder (24) of the clamp (2) are clamped in the channels (52, 560) between the clamping part (50) and the retaining part (56), particularly preferably with a spacer (54) accommodated at the same time between the strands (22).

8. Device (1) according to one of the preceding claims, **characterized in that** the clamp (2) has at least one locking receptacle (29) on a leg (20), which is provided for accommodating a locking element (3), wherein the locking receptacle (29) is preferably in the form of a bent hook in the round wire, forming a single piece with the leg (20).

9. Device (1) according to claim 8, **characterized in that** a locking receptacle (29) is provided on each leg (20), and the locking element (3) has two wire loops (30, 32), each of which can be hooked into one of the locking receptacles (29), wherein the wire loops (30, 32) are connected with each other via a locking lever (34), and the locking lever (34) is pivotably connected with the first wire loop (30) via a first locking axle (340), and with the second wire loop (32) via a second locking axle (342), wherein the two locking axles (340, 342) do not coincide.

10. Device (1) according to claim 9, **characterized in that** the locking lever (34) is bent such that, in the locked position, it is shielded by at least one of the wire loops (30) in a manner that prevents unintentional opening of the locking lever (34).

## Revendications

1. Dispositif (1) permettant de maintenir une conduite (100) sur une structure (4) d'une installation de remplissage de boissons, comprenant un moyen de serrage (2) comportant deux branches (20) de forme complémentaire l'une par rapport à l'autre et permettant de recevoir par serrage la conduite (100) entre les branches (20) et comportant un support (24) portant les branches (20) et permettant de monter le moyen de serrage (2) sur la structure (4) de l'installation de remplissage de boissons, dans lequel
les branches (20) et le support (24) sont pliés d'un seul tenant à partir de fil rond,
le support (24) du moyen de serrage (2) est dimensionné de sorte qu'une distance prédéterminée entre la structure (4) de l'installation de remplissage de boissons et la conduite (100) peut être atteinte, de préférence pour pouvoir régler une inclinaison de la conduite (100) sur son extension,
un dispositif de serrage (5) est prévu pour la fixation par serrage du support (24) sur la structure (4) de l'installation de remplissage de boissons,
le support (24) est dimensionné de sorte que la pince (2) peut être déplacée par rapport au dispositif de serrage (5) non fixé afin d'obtenir le réglage de la distance entre la structure (4) et la conduite (100),
le moyen de serrage (2) présente une mâchoire (26) pour l'introduction de la conduite (100) entre les branches (20) et le support (24) est disposé sur le côté du moyen de serrage (2) opposé à la mâchoire (26), et
chaque branche (20) s'étend de manière correspondante dans un tronçon (22) du support (24), les deux tronçons (22) du support (24) sont formés parallèlement l'un à l'autre et sont reliés l'un à l'autre par l'intermédiaire d'une boucle de fil (28), dans lequel la boucle de fil (28) est située en face de la mâchoire (26) du moyen de serrage (20), dans lequel
le fil rond qui forme le moyen de serrage (2) s'étend entièrement dans un plan.

2. Dispositif (1) selon la revendication 1, **caractérisé en ce que** les branches (20) sont dimensionnées de sorte qu'une conduite (100) peut être reçue entre les deux branches (20) de telle sorte qu'un point de contact (102) du moyen de serrage (2) avec la conduite (100) se trouve sur le côté de la conduite (100) tourné vers la mâchoire (26).

3. Dispositif (1) selon l'une des revendications précédentes, **caractérisé en ce que** le moyen de serrage (2) entre en contact avec la conduite (100) en des points de contact (102) qui forment entre eux une droite (110), dans lequel une droite de centre (112) coupe l'axe de conduite (114) de la conduite (100) parallèlement à ladite droite (110) et la droite de centre (112) forme un angle (α) avec une droite (116) s'étendant à travers l'axe de conduite (114) et l'un des points de contact (102), angle qui se situe dans une plage allant de 10° à 20°, de préférence est de 17°.

4. Dispositif (1) selon l'une des revendications précédentes, **caractérisé en ce que** le dispositif de serrage (5) prévoit une partie de serrage (50) comportant des canaux de réception (52) pour au moins deux tronçons (22) du fil rond du support (24) du moyen de serrage (2).

5. Dispositif (1) selon la revendication 4, **caractérisé en ce que** la partie de serrage (50) présente un boulon (502) pour fixer la partie de serrage (50) à la structure (4) de l'installation de remplissage de boissons.

6. Dispositif (1) selon l'une des revendications précédentes, **caractérisé en ce que** le dispositif de serrage (5) comprend un écarteur (54) qui est inséré entre des tronçons (22) du fil rond du support (24) et fournit une distance prédéterminée entre les tronçons (22), dans lequel l'écarteur (54) est de préférence fabriqué en EPDM et dans lequel l'écarteur (54) reçoit de préférence un boulon (502) de la partie de serrage (50) dans un alésage (542).

7. Dispositif (1) selon l'une des revendications précédentes, **caractérisé en ce que** le dispositif de serrage (5) présente une partie de support (56) qui prévoit des canaux de réception (560) pour au moins deux tronçons (22) du fil rond du support (24) du moyen de serrage (2) et un moyen antitorsion (562) permettant de recevoir la partie de maintien (56) sur la structure (4) de l'installation de remplissage de boissons sans qu'elle puisse tourner, dans lequel la partie de support (56) coopère de préférence avec la partie de serrage (50) et les au moins deux tronçons (22) du fil rond du support (24) sont serrés entre la partie de serrage (50) et la partie de support (56) dans les canaux de réception (52, 560), de manière particulièrement en recevant en même temps un écarteur (54) entre les tronçons (22).

8. Dispositif (1) selon l'une des revendications précédentes, **caractérisé en ce que** le moyen de serrage (2) fournit au moins un logement pour moyen de verrouillage (29) sur une branche (20) qui est prévu pour recevoir un moyen de verrouillage (3), dans lequel le logement pour moyen de verrouillage (29) est de préférence réalisé sous la forme d'un crochet plié d'un seul tenant avec la branche (20) à partir du fil rond.

9. Dispositif (1) selon la revendication 8, **caractérisé en ce qu'**un logement pour moyen de verrouillage (29) est prévu sur chaque branche (20) et le moyen de verrouillage (3) présente deux boucles de fil (30, 32) qui peuvent être respectivement accrochées dans l'un des logements pour moyen de verrouillage (29), dans lequel les boucles de fil (30, 32) sont reliées entre elles par l'intermédiaire d'un levier de verrouillage (34) et le levier de verrouillage (34) est relié de manière à pouvoir pivoter à la première boucle de fil (30) par l'intermédiaire d'un premier axe de verrouillage (340) et à la seconde boucle de fil (32) par l'intermédiaire d'un second axe de verrouillage (342), dans lequel les deux axes de verrouillage (340, 342) ne coïncident pas.

10. Dispositif (1) selon la revendication 9, **caractérisé en ce que** le levier de verrouillage (34) est plié de sorte qu'il est protégé par au moins l'une des boucles de fil (30) dans la position verrouillée, de sorte qu'une ouverture involontaire du levier de verrouillage (34) est évitée.
